# FASCICULE DE BREVET EUROPEEN

(11) **EP 2 146 828 B1**
(45) Date de publication et mention de la délivrance du brevet: **29.05.2013**
(21) Numéro de dépôt: 08775576.5
(22) Date de dépôt: 20.02.2008
(51) Int. Cl.: B26D 7/18, B29C 70/00, B65H 37/00

(54) **DISPOSITIF DE SEPARATION ET D'EVACUATION DES CHUTES DECOUPEES DANS UNE BANDE DE PREIMPREGNE**
VORRICHTUNG ZUM ABTRENNEN UND ABSAUGEN VON SCHNEIDABFÄLLEN AUS EINEM VORBESCHICHTETEN BAND
DEVICE FOR SEPARATING AND DISCHARGING TRIMMINGS CUT IN A PRE-IMPREGNATED STRIP

(30) Priorité: 02.04.2007 FR 0702389
(43) Date de publication de la demande: 27.01.2010
(73) Titulaire: Forest-Line Capdenac, 75017 Paris (FR)
(72) Inventeur: TILLEMENT, Pierre, André, Henri, F-12300 Decazeville (FR); GARDELLE, Benoît Arnaud, F-12700 Capdenac (FR)
(74) Mandataire: Bertrand, Didier
(86) Numéro de dépôt international: PCT/FR2008/000220
(87) Numéro de publication internationale: WO 2008/135645

(56) Documents cités:
- EP-A2- 0 144 927
- WO-A-01/56754
- FR-A1- 2 656 290
- GB-A- 1 377 443
- US-A- 5 587 043

## Description

L'invention concerne un dispositif de séparation et d'évacuation des chutes sur une machine à découper.

Il est connu, par exemple par le document US 4842684, de déposer automatiquement sur un moule ou outillage de dépose, grâce à un robot muni d'une tête de drapage, un ruban ou une nappe de fibres pour la fabrication de pièces diverses telles que des ailes d'avion, à partir d'un ruban composite constitué d'éléments de fibres (carbone, verre, Kevlar®, etc.) encollées, par imprégnation d'une résine thermodurcissable ou thermo-plastique, et supportées sur un ruban de support en papier ou en film plastique. Le ruban composite est dévidé d'une bobine pour passer sur la tête de drapage où le ruban de fibres préimprégnées est séparé du ruban de support, ce dernier étant renvoyé sur un mandrin d'enroulement, tandis que le préimprégné est appliqué sur le moule ou les couches précédentes déjà déposées, par un organe de compactage constitué généralement d'un rouleau ou un sabot applicateur lié à la tête de drapage.

Compte tenu des formes des pièces réalisées, et notamment de leurs bords, il convient non seulement de déposer des tronçons de ruban *« pleine largeur* », à quatre cotés, mais également des tronçons de formes diverses, obtenus par découpe complexe du ruban. Nous appelons « lé » le tronçon qui sera déposé et « chute » celui entre les lés découpés qui sera éliminé.

Pour les découpes traversantes de formes simples, on utilise un processus de dépose monophase qui comprend la découpe *in situ* des bandes à déposer et leur dépose immédiate par la même machine. Un couteau mécanique ou à ultrasons coupe le ruban préimprégné directement sur son papier support sans couper ce dernier qui sera réenroulé sur le mandrin après pelage.

Pour les bandes à découper de forme complexe, la Demanderesse a mis au point un procédé biphase, selon lequel la découpe se fait en amont du procédé de dépose proprement dit, avec une première machine spécialisée dans laquelle les tronçons successifs prédécoupés sont disposés sur un ruban de support ou entre deux protecteurs et enroulés sur une cassette installée sur la tête de drapage.

Cette première machine réalise donc la coupe des lés, le pelage du support papier, l'évacuation des chutes et le reconditionnement des lés.

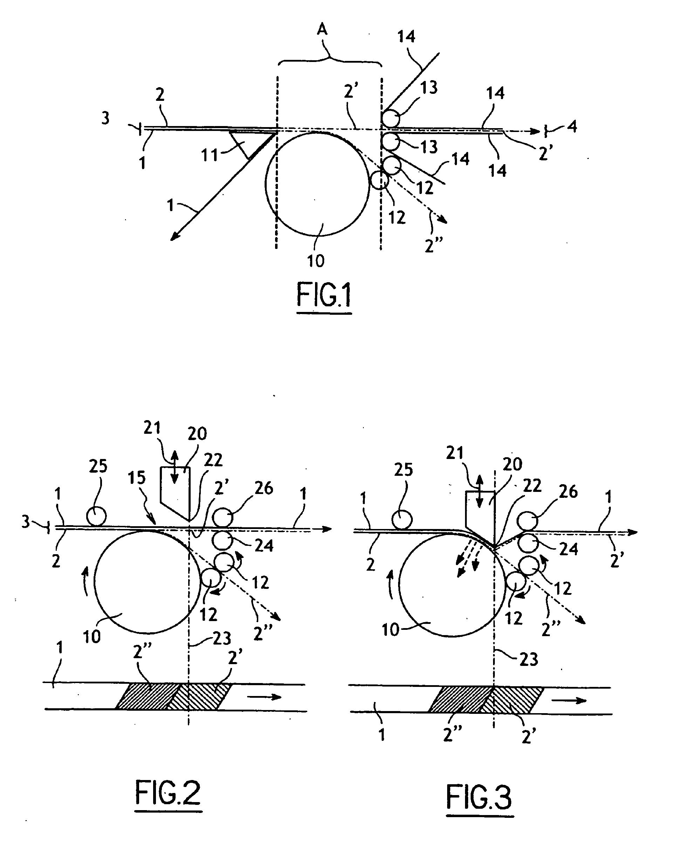

La Demanderesse a déjà fait connaître dans le document FR 2 656 290 un dispositif de séparation et d'évacuation de chutes découpées dans une bande de matériau, dans lequel les chutes sont détournées de leur trajet rectiligne par un rouleau aspirant et elles sont évacuées par des rouleaux d'enlèvement. On a représenté en figure 1 du présent document l'état de l'art actuel. La bande se présente en amont du dispositif sous forme d'un complexe 3 associant une épaisseur de ruban de support 1 et une épaisseur de préimprégné 2 qui a été auparavant découpée sur le ruban support sans couper ce dernier par des moyens de découpe non représentés en amont du dispositif. Le préimprégné 2 est constitué généralement de fibres de carbone unidirectionnelles noyées dans une matrice souple de résine collante. Il y a donc dans le préimprégné découpé 2 des zones utiles 2' appelées lés qui doivent être conservées et seront reconditionnées et des zones de chutes 2" qui doivent être évacuées par le dispositif. Celui-ci comprend essentiellement un rouleau ou tambour aspirant 10 comportant des zones aspirantes d'étendue réglable. Juste en amont du tambour 10, une arête de pelage 11 permet de peler le ruban support 1 de sorte que seul le préimprégné 2 passe devant la partie active du tambour 10. S'il y a aspiration, ce que le programme de pilotage déclenche en fonction des découpes du préimprégné 2, la partie 2" à évacuer suit la périphérie du tambour 10 et est rapidement reprise par des rouleaux d'enlèvement 12 pour être entraînée vers une poubelle. S'il n'y a pas aspiration, la partie conservée 2' de préimprégné 2 continue son trajet rectiligne pour être prise dans une mâchoire de reconditionnement formée par deux rouleaux associés 13 qui délivrent autour des découpes conservées ou lés 2' deux films de reconditionnement 14 de manière à former en aval un complexe 4 de découpes de préimprégné reconditionnées qui sera enroulé sur une cassette pour être utilisé dans une machine de dépose.

Selon ce dispositif connu, il existe une zone de transfert A, entre le nez de l'arête de pelage 11 et la mâchoire de reconditionnement 13, où les lés 2' devant être reconditionnés ne sont pas guidés.

Enfin, avec ce procédé, il y a lors de la dépose inversion du côté du lé déposé par rapport aux bandes déposées par les machines de dépose en procédé monophase.

On connaît par le document WO 01/56754 un dispositif qui permet de séparer les découpes réalisées dans une feuille de métal ou de carton grâce à un rouleau déviateur qui écarte directement la feuille découpée considérée comme une chute et laisse les découpes venir s'empiler en aval du dispositif. Dans la mesure où il ne s'agit pas de découpe de préimprégnés, c'est-à-dire d'éléments collants, qui doivent être disposés sur une bande de support, ce document est sans rapport avec le problème de l'invention, à savoir le bon positionnement des préimprégnés après l'élimination des chutes.

Le but de l'invention est de proposer un nouveau dispositif de séparation et d'évacuation des chutes qui améliore la précision de positionnement des lés à la dépose.

L'invention atteint son but grâce à un dispositif de séparation et d'évacuation des chutes d'une bande de matériau entraînée sur un trajet sensiblement rectiligne, la bande comportant une épaisseur de ruban support continu et une épaisseur de matière découpée comportant des chutes à éliminer et des lés à conserver, le dispositif comportant un rouleau d'aspiration rotatif disposé transversalement au trajet et tangent à la bande le long d'une ligne d'action, et en aval de ladite ligne d'action d'une part un dispositif de reprise des lés situé sensiblement sur ledit trajet rectiligne, et d'autre part un dispositif d'évacuation des chutes situé plus près de la périphérie dudit rouleau, caractérisé en ce que le ruban support continu traverse le dispositif le long dudit trajet rectiligne en conservant sur lui en permanence les lés et en ce que le dispositif comporte un dispositif de déviation provisoire de la bande mobile orthogonalement à la bande, disposé entre ladite ligne d'action et ledit dispositif de reprise des lés, pour dévier provisoirement le trajet de la bande en le rapprochant du rouleau, moyennant quoi le pelage initial des chutes est facilité par la déviation provisoire imposée par ledit dispositif de déviation.

Ainsi selon l'invention, d'une part le ruban support de la bande composite n'est pas pelé en amont du rouleau mais est conservé tout au long du dispositif et d'autre part, le pelage, qui ne concerne que les chutes à éliminer, se fait en aval de la ligne d'action du rouleau. Du fait que le support de bande est conservé avec ses lés à conserver toujours en place, il n'y a aucun risque de mauvais positionnement de ces lés. L'invention permet de supprimer les films de reconditionnement de l'art antérieur.

Le pelage des chutes se fait sous le double effet de l'aspiration sélective du rouleau et de l'angle de déviation conféré par l'enfoncement du dispositif déviateur dans la bande lors du passage d'une découpe à éliminer, du moins au début de ce passage.

Le dispositif de reprise des lés, toujours en place sur le support d'origine, peut être constitué par n'importe quel dispositif de guidage de bande disposé en aval du trajet, à proximité du rouleau aspirant, l'entraînement de la bande pouvant se faire par traction depuis le poste d'enroulement de cassette où la bande munie de ses lés est réenroulée.

Il est avantageusement prévu à proximité de la ligne d'action un contre-rouleau de confinement de trajet, associé au rouleau aspirant et au dispositif déviateur pour engendrer une déviation suffisamment caractérisée pour favoriser le pelage lors de l'enfoncement du dispositif déviateur. En d'autres termes, il s'agit de donner provisoirement à la bande qui défile un trajet suffisamment angulaire pour permettre un décollage facile de la chute, avec l'aide de l'aspiration du rouleau. Avantageusement, le dispositif déviateur comporte une arête ou un rouleau de pelage

Il est aussi de préférence prévu à proximité de la ligne d'action, en amont et en aval du trajet, des rouleaux presseurs de confinement du trajet évitant le gonflement de la bande lors de la descente du dispositif déviateur.

De manière avantageuse, le rouleau presseur aval est associé avec le contre-rouleau aval et forme le dispositif de reprise de la bande munie des découpes conservées.

Le dispositif d'évacuation des découpes à éliminer est avantageusement constitué de rouleaux ou de tapis sans fin dirigeant les découpes vers une poubelle.

Le dispositif déviateur peut être continu ou segmenté dans le sens transversal de la bande pour agir localement sur la largeur de la bande en fonction de la forme de la chute à évacuer.

D'autres caractéristiques et avantages de l'invention apparaîtront à la lecture de la description suivante, en référence aux dessins annexés sur lesquels :
- la figure 1 est une vue schématique latérale d'un dispositif de séparation et d'évacuation de l'art antérieur ;
- la figure 2 combine une vue schématique latérale d'un dispositif de séparation et d'évacuation conforme à la présente invention et une vue de dessus de la bande de découpes, le dispositif déviateur étant en position relevée ;
- la figure 3 combine une vue schématique latérale d'un dispositif de séparation et d'évacuation conforme à la présente invention et une vue de dessus de la bande de découpes, le dispositif déviateur étant en position abaissée.

La figure 1 a déjà été décrite. On utilisera pour les figures 2 et 3, relatives à l'invention, les mêmes repères quand ils désignent les mêmes éléments que dans l'art antérieur.

Le complexe 3 formé de l'épaisseur de papier 1 et de l'épaisseur de préimprégné prédécoupé 2 est fourni en amont du dispositif selon un trajet globalement rectiligne que le papier 1 emprunte jusqu'en aval du dispositif. Les découpes de préimprégné 2 sur le papier 1 comportent, comme le montrent le bas des figures 2 ou 3, des découpes à conserver ou lés 2' alternant avec des découpes à éliminer ou chutes 2" séparées par une ligne de découpe qui peut être notamment une ligne oblique. On en n'a représenté que deux pour simplifier le dessin. Selon l'invention, les lés 2' doivent traverser le dispositif en restant attachés à leur papier support 1 tandis que les chutes 2" doivent être évacuées grâce audit dispositif qui comporte un rouleau aspirant rotatif 10 analogue à celui de l'art antérieur, c'est-à-dire susceptible d'offrir une surface aspirante au bon moment lorsque qu'une chute 2" se présente au niveau de la ligne d'action 15 située à l'endroit où le rouleau 10 tangente le trajet rectiligne de la bande complexe 3.

Pour favoriser le pelage de la chute 2" du papier de support 1, l'invention prévoit juste en aval de la ligne d'action 15, un organe déviateur 20 mobile verticalement (double flèche 21) entre une position escamotée ou position levée (figure 2), en dehors du trajet de la bande et n'interférant pas avec elle, et une position descendue ou enfoncée (figure 3), dans laquelle l'organe déviateur 20 vient appuyer sur la bande 3, du côté du papier 1, par l'intermédiaire de son extrémité conformée en arête 22.

Lorsque, comme on le voit sur le bas de la figure 3, on détecte que le début d'une chute 2" s'approche de l'aplomb de l'arête 22, marqué par la ligne 23, le dispositif de pilotage de la machine descend l'organe déviateur 20 (cf. figure 3) de manière qu'il appuie la bande 3 vers le bas, contre la périphérie du rouleau 10 (la forme biseautée de l'extrémité de l'organe 20 lui permet d'approcher cette périphérie au plus près). Grâce à un contre-rouleau d'appui 24 situé à proximité en aval, adjacent à l'axe du trajet rectiligne de la bande, le trajet de la bande se modifie provisoirement pour former sensiblement un angle dont le sommet correspond à l'arête 22 de sorte que le pelage des chutes 2" est favorisé : à partir de ce point, la bande ne conserve que le papier 1 et les lés 2' et passe sur le contre-rouleau 24, tandis que les chutes 2", aspirées par le tambour sont entraînées vers une poubelle, éventuellement au moyen de rouleaux d'entraînement 12 ou de tapis roulants analogues à ceux de l'art antérieur. Une fois que le début de la chute 2" est correctement pelé du papier support et engagé dans les rouleaux 12, l'organe déviateur 20 peut être remonté vers sa position levée, le pelage se continuant de lui-même par entraînement.

Pour éviter que l'enfoncement de l'organe déviateur 20 ne vienne par réaction faire gonfler la bande 3 de part et d'autre de l'organe déviateur 20, on dispose au-dessus de la bande deux rouleaux 25, 26 de confinement de son trajet vers le haut. Le rouleau aval 26 est avantageusement couplé avec le rouleau 24 pour former une paire de rouleaux coopérants servant de dispositif de reprise de bande, l'entraînement de celle-ci étant assuré par un dispositif d'enroulement de cassette non représenté situé en aval.

## Revendications

1. Dispositif de séparation et d'évacuation des chutes d'une bande de matériau entraînée sur un trajet sensiblement rectiligne, la bande (3) comportant une épaisseur de ruban support continu (1) et une épaisseur de matière découpée (2) comportant des chutes à éliminer (2") et des lés à conserver (2'), le dispositif comportant un rouleau d'aspiration rotatif (10) disposé transversalement au trajet et tangent à la bande (3) le long d'une ligne d'action (15), et en aval de ladite ligne d'action (15) d'une part un dispositif (24, 26) de reprise des lés (2') situé sensiblement sur ledit trajet rectiligne, et d'autre part un dispositif (12) d'évacuation des chutes (2") situé plus près de la périphérie dudit rouleau (10), **caractérisé en ce que** le support continu (1) traverse le dispositif le long dudit trajet rectiligne en conservant sur lui en permanence les lés (2') et **en ce que** le dispositif comporte un dispositif (20) de déviation provisoire de la bande (3), mobile orthogonalement à la bande (3), disposé entre ladite ligne d'action (15) et ledit dispositif (24, 26) de reprise des lés, pour dévier provisoirement le trajet de la bande (3) en le rapprochant du rouleau (10), moyennant quoi le pelage initial des chutes (2") est facilité par la déviation provisoire imposée par ledit dispositif de déviation (20).

2. Dispositif selon la revendication 1, **caractérisé en ce qu'**il est prévu à proximité de la ligne d'action (15) un contre-rouleau (24) de confinement de trajet, associé au rouleau aspirant (10) et au dispositif déviateur (20) pour engendrer une déviation suffisamment caractérisée pour favoriser le pelage lors de l'enfoncement du dispositif déviateur (20).

3. Dispositif selon l'une quelconque des revendications 1 ou 2, **caractérisé en ce qu'**il est prévu à proximité de la ligne d'action (15), en amont et en aval du trajet, des rouleaux presseurs (25, 26) de confinement du trajet évitant le gonflement de la bande (3) lors de la descente du dispositif déviateur (20).

4. Dispositif selon les revendications 2 et 3, **caractérisé en ce que** le rouleau presseur aval (26) est associé avec le contre-rouleau aval (24).

5. Dispositif selon l'une quelconque des revendications 1 à 4, **caractérisé en ce que** le dispositif d'évacuation des découpes à éliminer est avantageusement constitué de rouleaux (12) ou de tapis sans fin dirigeant les chutes (2") vers une poubelle.

6. Dispositif selon l'une quelconque des revendications 1 à 5, **caractérisé en ce que** le dispositif déviateur (20) est continu

7. Dispositif selon l'une quelconque des revendications 1 à 5, **caractérisé en ce que** le dispositif déviateur (20) est segmenté pour agir localement sur la largeur de la bande (3) en fonction de la forme de la chute (2") à évacuer.

8. Dispositif selon l'une quelconque des revendications précédentes, **caractérisé en ce que** la matière découpée (2) est constituée de préimprégnés.

## Patentansprüche

1. Vorrichtung zum Abtrennen und Absaugen von Abfällen von einem auf einer in etwa geradlinig verlaufenden Strecke angetriebenen Materialband, wobei das Band (3) eine Lage bestehend aus fortlaufendem Trägerband (1) und eine Lage bestehend aus Schneidmaterial (2) umfasst, umfassend zu entsorgende Abfälle (2") und zurückzubehaltende Bahnen (2'), wobei die Vorrichtung eine drehende Ansaugwalze (10), die quer zur Strecke und tangential zum Band (3) entlang einer Wirklinie (15) angeordnet ist, umfasst, und hinter der Wirklinie (15) einerseits eine Vorrichtung (24, 26) zur Wiederaufnahme der Bahnen (2'), die in etwa auf der geradlinig verlaufenden Strecke angeordnet ist, und andererseits eine Vorrichtung (12) zum Absaugen von Abfällen (2"), die näher am Umfang der Walze (10) angeordnet ist, umfasst, **dadurch gekennzeichnet, dass** das fortlaufende Trägerband (1) die Vorrichtung entlang der gradlinig verlaufenden Strecke durchläuft, wobei die Bahnen (2') fest auf dem Trägerband zurückbehalten werden, und dass die Vorrichtung eine zum Band (3) rechtwinklig bewegliche Vorrichtung (20) zur vorübergehenden Umleitung des Bandes (3) umfasst, die zwischen der Wirklinie (15) und der Vorrichtung (24, 26) zur Wiederaufnahme der Bahnen angeordnet ist, mittels derer das Band (3) vorübergehend umgeleitet wird, wobei das Band in die Richtung der Walze (10) gebracht wird, wodurch das erste Ablösen der Abfälle (2") durch die vorrübergehende Umleitung des Bandes mittels der Umleitungsvorrichtung erleichtert wird.

2. Vorrichtung nach Anspruch 1, **dadurch gekennzeichnet, dass** nahe der Wirklinie (15) eine Gegenwalze (24) zur räumlichen Eingrenzung der Strecke, die mit der Ansaugwalze (10) und der Umleitungsvorrichtung (20) verbunden ist, vorgesehen ist, um eine ausreichende Umleitung zu erwirken, **dadurch gekennzeichnet, dass** sie das Ablösen beim Eindrücken des Bandes durch die Umlenkungsvorrichtung (20) begünstigt.

3. Vorrichtung nach einem der Ansprüche 1 oder 2, **dadurch gekennzeichnet, dass** nahe der Wirklinie (15), vor und hinter der Strecke Presswalzen (25, 26) zur Eingrenzung der Strecke angeordnet sind, die bei Absenkung der Umlenkungsvorrichtung (20) eine Wölbung des Bandes (3) verhindern.

4. Vorrichtung nach Ansprüchen 2 und 3, **dadurch gekennzeichnet, dass** die hintere Presswalze (26) mit der hinteren Gegenwalze (24) verbunden ist.

5. Vorrichtung nach einem der Ansprüche 1 bis 4, **dadurch gekennzeichnet, dass** die Vorrichtung zum Absaugen der zu entsorgenden Schneidabfälle vorzugsweise aus Walzen (12) oder aus Endlosförderbändern besteht, die die Abfälle (2") in einen Abfallbehälter leiten.

6. Vorrichtung nach einem der Ansprüche 1 bis 5, **dadurch gekennzeichnet, dass** die Umleitungsvorrichtung (20) fortlaufend ist.

7. Vorrichtung nach einem der Ansprüche 1 bis 5, **dadurch gekennzeichnet, dass** die Umleitungsvorrichtung (20) segmentiert ist, um abhängig von der Form der zu entsorgenden Abfälle (2"), auf der Breite des Bandes (3) lokal zu wirken.

8. Vorrichtung nach einem der vorhergehenden Ansprüche, **dadurch gekennzeichnet, dass** das Schneidmaterial (2) aus Prepeg besteht.

## Claims

1. Device for separating and discharging trimmings from a strip of material carried on a substantially rectilinear path, the strip (3) comprising a thickness of continuous backing tape (1) and a thickness of cut material (2) comprising trimmings to be discarded (2") and panels to be retained (2'), the device comprising a rotating suction roller (10) arranged transverse to the path and tangential to the strip (3) along an action line (15), and, downstream of said action line (15), on the one hand a device (24, 26) for collecting the panels (2') situated substantially on said rectilinear path, and, on the other hand, a device (12) for discharging the trimmings (2") situated closer to the periphery of said roller (10), **characterised in that** the continuous backing (1) passes through the device along said rectilinear path while permanently retaining the panels (2') thereon, and **in that** the device comprises a device (20) for temporarily diverting the strip (3), which device can move at right angles to the strip (3) and is arranged between said action line (15) and said device (24, 26) for collecting the panels, in order to temporarily divert the path of the strip (3) while bringing it closer to the roller (10), as a result of which the initial stripping of the trimmings (2") is made easier by the temporary diversion imposed by said diversion device (20).

2. Device according to claim 1, **characterised in that**, close to the action line (15), a path-containment backing roller (24) is provided, which is associated with the suction roller (10) and the diversion device (20) in order to generate a diversion that is sufficiently pronounced to promote the stripping during the downward thrust of the diversion device (20).

3. Device according to either claim 1 or claim 2, **characterised in that**, close to the action line (15), upstream and downstream of the path, path-containment presser rollers (25, 26) are provided which prevent the strip (3) from swelling during the downward movement of the diversion device (20).

4. Device according to either claim 2 or claim 3, **characterised in that** the downstream presser roller (26) is associated with the downstream backing roller (24).

5. Device according to any of claims 1 to 4, **characterised in that** the device for discharging the cuttings to be discarded advantageously consists of rollers (12) or of endless belts which direct the trimmings (2") to a waste receptacle.

6. Device according to any of claims 1 to 5, **characterised in that** the diversion device (20) is continuous.

7. Device according to any of claims 1 to 5, **characterised in that** the diversion device (20) is segmented in order to act locally on the width of the strip (3) depending on the shape of the trimming (2") to be discharged.

8. Device according to any of the preceding claims, **characterised in that** the cut material (2) consists of prepregs.
